# EUROPÄISCHE PATENTANMELDUNG

(11) **EP 1 031 739 A2**
(43) Veröffentlichungstag der Anmeldung: **30.08.2000**
(21) Anmeldenummer: 00102008.0
(22) Anmeldetag: 02.02.2000
(51) Int. Cl.: F16B 23/00, F16B 37/02

(54) **Spannelement**

(30) Priorität: 25.02.1999 DE 19908154
(71) Anmelder: INA Wälzlager Schaeffler oHG, 91074 Herzogenaurach (DE)
(72) Erfinder: Zielfleisch, Hans-Jörg, 70192 Stuttgart (DE); Pflug, Rainer, 91560 Heilsbronn (DE)

(57) **Zusammenfassung**

Vorgeschlagen ist ein Spannelement (1) wie eine Spannmutter, bestehend aus tiefgezogenem Stahlblech und mit einem eingewalzten Gewindeabschnitt (5). Die Spannmutter besitzt an ihrem Außenmantel (6) eine einteilig mit ihr verbundene Mitnehmereinrichtung (9), welche von einer den Gewindeabschnitt (5) aufweisenden Stirnseite (3) des Spannelements (1) ausgeht und aus zumindest einem lappenähnlichen Abschnitt (7) besteht, der auf den Außenmantel (6) des Spannelements (1) gebogen ist. Dabei kann der lappenähnliche Abschnitt (7), in Axialrichtung gesehen, zumindest teilweise den Gewindeabschnitt (5) überlappen. Ein derartiges Spannelement (1) ist billig herstellbar und entspricht den Anforderungen hinsichtlich Leichtbau. Besonderer Vorteil der Erfindung ist es, daß die Mitnehmereinrichtung (9) keinen Einfluß auf den Gewindeabschnitt (5) ausübt.

## Beschreibung

### Gebiet der Erfindung

Die Erfindung betrifft ein Spannelement wie eine Spannmutter oder -schraube, mit hülsenartig gestufter Geometrie, das an seinem Innen- oder Außemantel wenigstens einen im Bereich dessen Stirnseite auslaufenden Gewindeabschnitt besitzt.

### Hintergrund der Erfindung

Ein derartiges Spannelement geht aus der als gattungsbildend betrachteten GB 21 33 479 A hervor. Dieses ist hier in einen Zylinderkopf einer selbstzündenden Brennkraftmaschine eingebaut. Es dient dabei der Aufnahme eines Pumpen-Düsen-Elements zur Einspritzung von Dieselkraftstoff.

Nachteilig ist es bei diesem vorbekannten Element, daß es relativ massiv in einem Zerspanungsprozeß hergestellt worden ist. Für die Großserienfertigung bedeutet dies einen erheblichen Materialeinsatz bei relativ hohen Fertigungskosten. Desweiteren kann der Fachmann sich dem vorbekannten Dokument entnehmen, daß dieses Spannelement relativ hoch baut.

### Aufgabe der Erfindung

Aufgabe der Erfindung ist es daher, ein Spannelement der vorbeschriebenen Art zu schaffen, bei welchem die aufgezeigten Nachteile beseitigt sind.

### Zusammenfassung der Erfindung

Erfindungsgemäß wird diese Aufgabe dadurch gelöst, daß das Spannelement aus tiefgezogenem Stahlblech mit eingewalztem Gewindeabschnitt ausgebildet ist, wobei es im Fall der Ausbildung als Spannmutter an seinem Außen- und im Fall der Ausbildung als Spannschraube an seinem Innenmantel eine einteilig mit diesem verbundene Mitnehmer- oder Rastiereinrichtung besitzt, welche Mitnehmer- oder Rastiereinrichtung von der den Gewindeabschnitt aufweisenden Stirnseite oder einem angrenzenden Bereich ausgeht und aus zumindest einem lappenähnlichen Abschnitt besteht, welcher in Richtung des dem Gewindeabschnitt abgewandten Mantels des Spannelements gebogen ist.

Durch diese Maßnahme ist ein billig zu fertigendes Spannelement vorgeschlagen, welches gleichzeitig relativ niedrig bauend ausgelegt werden kann. Besonderes Merkmal der Erfindung ist es dabei, daß die Mitnehmer- oder Rastiereinrichtung zur Befestigung des Spannelements gegenüber dem Zylinderkopf bzw. zum Aufschrauben auf das Pumpen-Düsen-Element (Innengewinde) im Bereich des jeweiligen Gewindeabschnitts, von der dort befindlichen Stirnseite ausgehend, ausgeführt ist. Bei dem ansonsten spanabhebend gefertigten Massivteil wäre eine Anordnung einer Mitnehmereinrichtung, wie beispielsweise eine Anordnung eines Mehrkants im Abschnitt des dem Gewindeabschnitt gegenüberliegenden Mantelbereichs des Spannelements, an sich problemlos. Diese Maßnahmen sind jedoch nicht auf das hier vorgeschlagene, erfindungsgemäß tiefgezogene und dünnwandige Stahlblechelement übertragbar.

In Fortbildung der Erfindung können die lappenähnlichen Abschnitt so hergestellt sein, daß sie Axialrichtung gesehen an ihrem dem Gewindeabschnitt gegenüberliegenden Mantel des Spannelements diesem Gewindeabschnitt überlappen. Somit erfolgt zum einen keine Beeinflußung bzw. Verformung des Spannelements im Bereich seines Gewindeabschnitts und zum anderen kann die Bauhöhe des gesamten Bauelements gering ausgeführt werden.

Zusätzlich ist es vorgeschlagen, dem lappenähnlichen Abschnitt rechteck- bzw. zahnähnliche Geometrie zu verleihen. Denkbar sind an dieser Stelle auch weitere Geometrien, wobei jedoch ein Formschluß zum Anschlußteil gewährleistet sein sollte. Der lappenähnliche Abschnitt kann selbstverständlich auch lediglich orthogonal zum Außenmantel des Spannelements angestellt sein und so beispielsweise als Verdrehsicherung für das Spannelement dienen.

Eine bevorzugte Anwendung des erfindungsgemäßen Spannelements soll sich auf einen Einbau in einem Zylinderkopf einer selbstzündenden Brennkraftmaschine beziehen. Dabei soll das Spannelement derart ausgebildet sein, daß in dessen Innenmantel ein Pumpen-Düsen-Element zur Injektion von Gasstoff eingesetzt werden kann.

Selbstverständlich bezieht sich der Schutzbereich auch auf Spannelement aus anderen dünnwandigen Werkstoffen als den hier vorgeschlagenen Stahlblech. Denkbar ist an dieser Stelle auch ein dünnwandiges Fließpreßteil bzw. eine Ausbildung aus einem Leichtbauwerkstoff wie einem polymerem Werkstoff. Ferner ist es denkbar, den lappenähnlichen Abschnitt auch als Lasche aus dem Mantel des Spannelements auszustanzen bzw. nicht unmittelbar im Bereich des auslaufenden Gewindeabschnitts auszuführen.

### Kurze Beschreibung der Zeichnung

Die Erfindung wird zweckmäßigerweise anhand der Zeichnung näher erläutert. Es zeigen:
- Figur 1: ein Spannelement im Längsschnitt und
- Figur 2: die Einzelheit X nach Figur 1.

### Ausführliche Beschreibung der Zeichnung

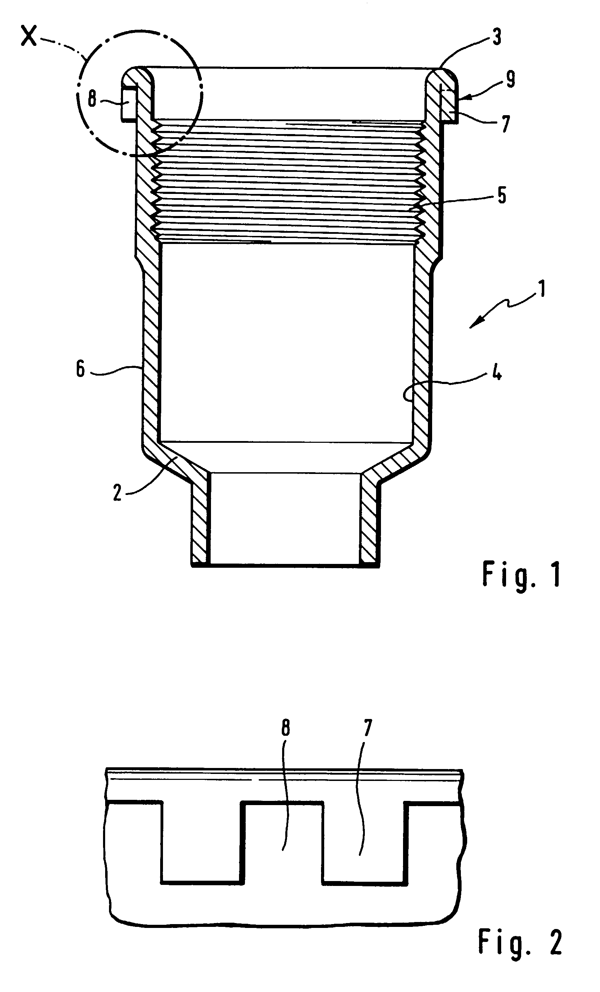

Figur 1 offenbart ein Spannelement 1, das hier als Spannmutter hergestellt ist. Die Spannmutter bezieht hülsenartig gestufte Geometrie, wobei an ihrem Stufenabschnitt 2 eine entsprechende Komplementärfläche beispielsweise eines Pumpen-Düsen-Elements zur Injektion von Kraftstoff einer selbstzündenden Brennkraftmaschine anliegen kann.

Das Spannelement 1 besteht aus einem dünnwandigen Werkstoff, wie vorzugsweise tiefgezogenem Stahlblech. Im Bereich seiner einen Stirnseite 3 weist es an dessen Innenmantel 4 einen Gewindeabschnitt 5 auf. Über seinen Außenmantel 6, an welchem optional auch bei der Ausbildung als Spannmutter ein weiters Gewinde oder ähnliches angeordnet sein kann, verläuft es beispielsweise in einer Aufnahme eines Zylinderkopfes der Brennkraftmaschine.

Ausgehend von der Stirnseite 3 verlaufen auf den Außenmantel 6 gebogene, lappenähnliche Abschnitte 7. Diese besitzen hier rechteckähnliche Geometrie. Denkbar ist zumindest ein lappenähnlicher Abschnitt 7, vorzugsweise sollen diese jedoch all umlaufend am Außenmantel 6 ausgebildet sein. Die lappenähnlichen Abschnitte 7 mit ihren Zwischenräumen 8 bilden zusammen eine Mitnehmereinrichtung 9 für ein formschlüssig eingreifendes Werkzeug. Im Falle der Ausbildung des Spannelements 1 als Spannmutter kann das Spannelement 1 durch Eingriff des Werkzeugs in die Zwischenräume 8 zwischen den Abschnitten 7 einfach auf das vorgenannten Pumpen-Düsen-Element oder ein ähnliches Element geschraubt werden. Die Mitnehmereinrichtung 9 kann auch zum Eingriff eines nicht näher bezeichneten Werkzeugs zur Lagefixierung des Spannelements gegenüber einem anderen Bauteil dienen.

Vorgesehen, jedoch nicht näher zeichnerisch dargestellt ist es, daß die Abschnitte 7 der Mitnehmereinrichtung 9 sich in Axialrichtung gesehen, derartig am Außenmantel 6 entlang erstrecken, daß sie den Gewindeabschnitt 5 zumindest teilweise überlappen. Somit ist eine einfache Mitnehmereinrichtung für das Spannelement 1 vorgeschlagen, welche, trotz sehr dünnwandiger Ausbildung des gesamten Spannelements, dessen Gewindeabschnitt nicht beeinflußt.

Im Falle einer Ausbildung des Spannelements als Spannschraube, sollen die lappenähnlichen Abschnitte auf den Innenmantel 4 des Spannelements 1 gebogen verlaufen.

### Bezugszeichen

- 1: Spannelement
- 2: Stufenabschnitt
- 3: Stirnseite
- 4: Innenmantel
- 5: Gewindeabschnitt
- 6: Außenmantel
- 7: lappenähnlicher Abschnitt
- 8: Zwischenraum
- 9: Mitnehmereinrichtung

## Patentansprüche

1. Spannelement (1) wie eine Spannmutter oder -schraube, mit hülsenartig gestufter Geometrie, das an seinem Innen- oder Außenmantel (4, 6) wenigstens einen im Bereich dessen Stirnseite (3) auslaufenden Gewindeabschnitt (5) besitzt, **dadurch gekennzeichnet,** daß das Spannelement (1) aus tiefgezogenem Stahlblech mit eingewalztem Gewindeabschnitt (5) ausgebildet ist, wobei es im Fall der Ausbildung als Spannmutter an seinem Außen- und im Fall der Ausbildung als Spannschraube an seinem Innenmantel (6, 4) eine einteilig mit diesem verbundene Mitnehmer- oder Rastiereinrichtung (9) besitzt, welche Mitnehmer- oder Rastiereinrichtung (9) von der den Gewindeabschnitt (5) aufweisenden Stirnseite (3) oder einem angrenzenden Bereich ausgeht und aus zumindest einem lappenähnlichen Abschnitt (7) besteht, welcher in Richtung des dem Gewindeabschnitt (5) abgewandten Mantels (4, 6) des Spannelements (1) gebogen ist.

2. Spannelement nach Anspruch 1, **dadurch gekennzeichnet,** daß der lappenähnliche Abschnitt (7), in Axialrichtung gesehen, zumindest teilweise den Gewindeabschnitt (5) überlappt.

3. Spannelement nach Anspruch 1, **dadurch gekennzeichnet,** daß der lappenähnliche Abschnitt (7) rechteck- bzw. zahnänliche Geometrie besitzt.

4. Spannelement nach Anspruch 1 oder 2, **dadurch gekennzeichnet,** daß das Spannelement (1) in einen Zylinderkopf einer selbstzündenden Brennkraftmaschine eingebaut oder einbaubar ist, wobei in den Innenmantel des Spannelements (1) ein Pumpe-Düsen-Element zur Injektion von Kraftstoff eingesetzt oder einsetzbar ist.
